# FASCICULE DE BREVET EUROPEEN

(11) **EP 1 975 573 B1**
(45) Date de publication et mention de la délivrance du brevet: **04.10.2017**
(21) Numéro de dépôt: 07300849.2
(22) Date de dépôt: 06.03.2007
(51) Int. Cl.: G01F 15/14, G01F 1/66

(54) **Compteur à cellule de mesure à ultra sons de type capsule, standardisée**
Zähler mit kapselartigen Ultraschallzellen, standardisiert
Standardised capsule-type meter with an ultrasound measurement cell

(43) Date de publication de la demande: 01.10.2008
(73) Titulaire: Itron Global SARL, Liberty Lake WA 99019 (US)
(72) Inventeur: Bouzid, Tarek, 71000 Macon (FR)
(74) Mandataire: Howson, Richard G.B.

(56) Documents cités:
- EP-A- 0 800 062
- EP-A- 1 227 303
- DE-A1- 10 026 568
- DE-A1- 19 713 526

## Description

L'invention concerne un compteur à cellule de mesure à ultra son de type capsule.

Elle se rapporte plus précisément à un compteur de fluide, en particulier d'eau, comportant une cellule de mesure à ultra sons, de type capsule, comportant un canal de mesure équipé de capteurs d'ultra sons et montée sur une bâche comportant une conduite d'entrée et une conduite de sortie, ladite conduite d'entrée communiquant avec l'entrée du canal de mesure et ladite conduite de sortie communiquant avec la sortie du canal de mesure.

Dans ce qui précède et dans ce qui suit, une cellule de mesure de type capsule signifie une cellule de mesure amovible qui peut être montée et démontée d'une bâche sans intervenir sur l'installation de cette dernière, c'est-à-dire sans nécessité de démontage et remontage de la bâche.

Un tel compteur est décrit dans le document de brevet EP 1 227 303.

Selon ce compteur de l'art antérieur, la bâche est de type coaxial, c'est-à-dire que la conduite de sortie présente un coude de façon à déboucher de façon centrée sur l'axe central de la bâche et la conduite d'entrée débouche par un orifice sur un volume annulaire coaxial.

La cellule de mesure proposée dans ce document est destinée uniquement à un tel type de bâche.

Or il existe actuellement un autre type de bâche couramment utilisée.

Ce second type de bâche comporte une conduite d'entrée et une conduite de sortie rectilignes et alignées débouchant directement dans l'intérieur de la bâche.

Le montage d'une cellule de mesure à ultra son sur une bâche du second type nécessite a priori la conception spécifique d'une cellule de mesure adaptée. Par ailleurs, a priori, à chaque type de bâche doit correspondre un type de cellule de mesure spécifique, ce qui alourdit la maintenance et le stockage de pièces pour de tels compteurs.

L'invention résout ce problème en proposant un compteur à cellule de mesure à ultra son de type capsule, comportant une cellule de mesure standardisée qui puisse être installée sur une bâche du premier type ou du second type.

Pour ce faire, l'invention propose un procédé de montage d'une cellule de mesure à ultra sons, de type capsule, comportant un canal de mesure équipé de capteurs d'ultra sons disposé dans un capot et destinée à être montée sur une bâche comportant une conduite d'entrée et une conduite de sortie de types différents, ladite conduite d'entrée étant destinée à communiquer avec l'entrée du dit canal de mesure et ladite conduite de sortie étant destinée à communiquer avec la sortie du dit canal de mesure, caractérisé en ce qu'il consiste à utiliser une pièce d'adaptation supplémentaire, spécifique au type de bâche et raccordant ladite conduite d'entrée avec l'entrée du dit canal de mesure et ladite conduite de sortie avec la sortie du dit canal de mesure.

Selon un premier mode de réalisation destiné à une bâche de type coaxial, dont une première conduite de sortie ou d'entrée présente un coude de façon à déboucher de façon centrée sur l'axe central de la bâche et une seconde conduite d'entrée ou de sortie débouche sur un volume annulaire coaxial, la pièce d'adaptation comprend une pièce tubulaire évasée destinée à être montée sur l'embouchure de ladite première conduite et à être reliée de façon étanche à ladite cellule de mesure.

De préférence, cette pièce d'adaptation comprend également une bague intermédiaire de serrage de la bâche sur la cellule de mesure.

Ladite pièce tubulaire évasée et ladite bague intermédiaire sont avantageusement formée d'une seule pièce.

Selon un second mode de réalisation destiné à une bâche de type aligné, dont la conduite d'entrée et la conduite de sortie rectilignes et alignées débouchent directement dans l'intérieur de la bâche, la pièce d'adaptation consiste en une pièce tubulaire coudée destinée à être montée sur l'embouchure de l'une desdites conduites et à être reliée de façon étanche à ladite cellule de mesure.

Et dans ce cas, de préférence, ladite pièce d'adaptation est destinée à être montée sur la conduite d'entrée.

L'invention concerne également un cellule de mesure pour la mise en oeuvre du précédent procédé, caractérisée en ce qu'elle comporte un plateau portant ledit canal de mesure et une bague de serrage destinée à la fixation de ce plateau sur ladite bâche, ledit plateau comportant une ouïe d'entrée et une ouïe de sortie, ladite pièce d'adaptation étant destinée à être connectée de façon étanche à l'une de ces ouïes.

Selon un mode de réalisation, ledit plateau, ledit canal de mesure et des logements destinés auxdits capteurs sont d'une seule pièce.

La cellule de mesure comporte, de préférence, au moins une sonde de température.

L'invention concerne aussi un ensemble dit capsule constitué d'une telle cellule de mesure et d'une telle pièce d'adaptation, assemblées.

L'invention est décrite ci-après plus en détail à l'aide de figures ne représentant que des modes de réalisation préférés de l'invention.
Les figures 1, 6 et 11 sont des vues en perspective éventuellement coupée et en coupe dans l'axe central d'une cellule de mesure conforme à l'invention.
Les figures 2A, 7A et 12A sont des vues en perspective éventuellement coupée et en coupe selon un plan P1 d'une pièce d'adaptation selon un premier mode de réalisation de l'invention.
Les figures 2B, 7B et 12B sont des vues en perspective éventuellement coupée et en coupe selon un plan P2 d'une pièce d'adaptation selon un second mode de réalisation de l'invention.
Les figures 3A, 8A et 13A sont des vues en perspective éventuellement coupée et en coupe selon un plan P1 d'une pièce d'adaptation montée sur une cellule de mesure selon le premier mode de réalisation de l'invention.
Les figures 3B, 8B et 13B sont des vues en perspective éventuellement coupée et en coupe selon un plan P2 d'une pièce d'adaptation montée sur une cellule de mesure selon le second mode de réalisation de l'invention.
Les figures 4A, 9A et 14A sont des vues en perspective éventuellement coupée et en coupe selon un plan P1 d'une bâche selon le premier mode de réalisation de l'invention.
Les figures 4B, 9B et 14B sont des vues en perspective éventuellement coupée et en coupe selon un plan P2 d'une bâche selon le second mode de réalisation de l'invention.
Les figures 5A, 10A et 15A sont des vues en perspective éventuellement coupée et en coupe selon un plan P1 d'un compteur selon le premier mode de réalisation de l'invention.
Les figures 5B, 10B et 15B sont des vues en perspective éventuellement coupée et en coupe selon un plan P2 d'un compteur selon le second mode de réalisation de l'invention.
Les figures 16A à 16D sont des vues en perspective, en coupe transversale selon un plan P' et en coupe longitudinale selon un plan P" d'une chambre de mesure conforme à l'invention.
Les figures 17A à 17D sont des vues en perspective coupée selon un premier plan, en coupe selon ce premier plan, en perspective coupée selon un second plan perpendiculaire au premier plan et en coupe selon ce second plan d'un compteur, selon le premier mode de réalisation de l'invention.
La figure 18 est une vue en perspective coupée d'un compteur, selon une première variante du second mode de réalisation de l'invention.
Les figures 19A et 19B sont des vues en perspective coupée selon deux plans perpendiculaires d'un compteur, selon une seconde variante du second mode de réalisation de l'invention.

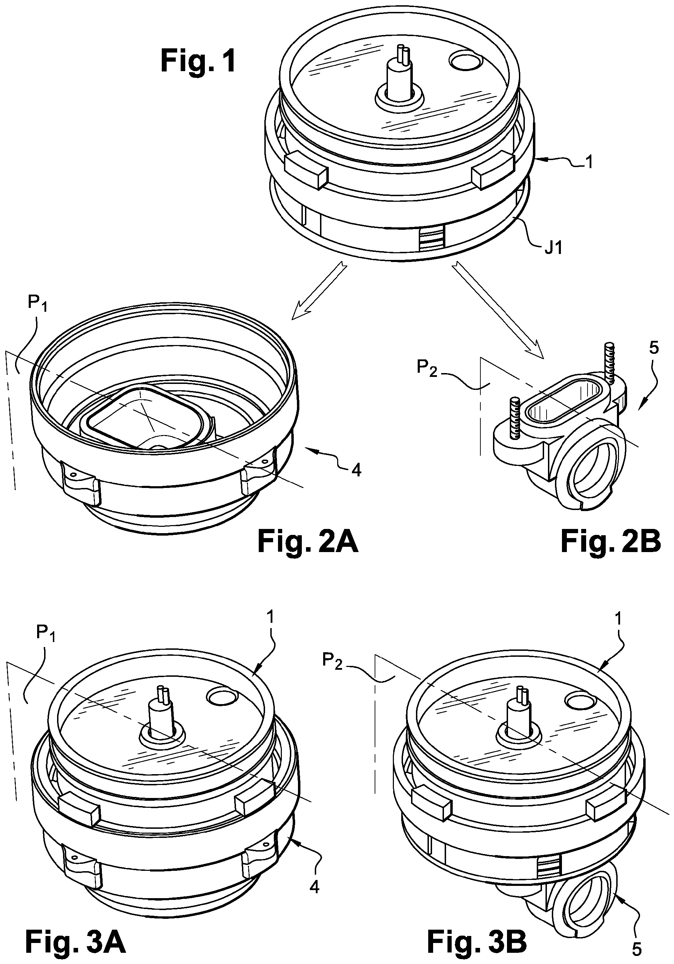

Comme illustré sur les figures 1 à 5, l'invention assure une standardisation d'une cellule de mesure à ultra sons 1, destinée à être montée sur une bâche comportant une conduite d'entrée et une conduite de sortie de types différents.

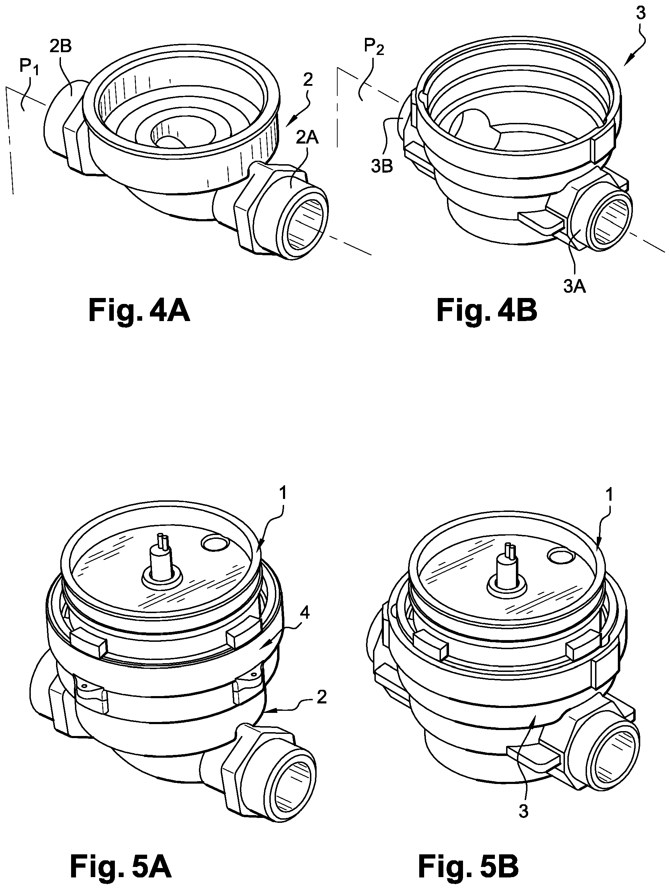

Ici sont représentées, sur les figures 4A et 4B, une bâche 2 de type coaxial, c'est-à-dire que la conduite de sortie 2B présente un coude de façon à déboucher de façon centrée sur l'axe central de la bâche et la conduite d'entrée 2A débouche par un orifice sur un volume annulaire coaxial et une bâche 3 de type aligné, c'est-à-dire comportant une conduite d'entrée 3A et une conduite de sortie 3B rectilignes et alignées débouchant directement dans l'intérieur de la bâche.

Le procédé de standardisation consiste à utiliser une pièce d'adaptation raccordant ladite conduite d'entrée avec l'entrée du dit canal de mesure et ladite conduite de sortie avec la sortie du dit canal de mesure. Cette pièce est raccordée à l'une des conduites de la bâche, cette pièce d'adaptation assurant un écoulement de fluide dans un canal de mesure de la cellule de mesure 1.

Dans le cas de la bâche de type coaxial, est utilisée une pièce d'adaptation 4 qui sera dite de premier type et, dans le cas d'une bâche de type aligné, est utilisée une autre pièce d'adaptation 5 qui sera dite de second type.

Cette pièce d'adaptation 4, 5 est tout d'abord solidarisée à la cellule de mesure pour former un sous-ensemble, appelé capsule, représenté sur les figures 3A et 3B, puis c'est ce sous-ensemble est connecté à la bâche correspondante 2, 3 pour former un compteur tel que représenté sur les figures 5A et 5B.

Sur les figures suivantes, les éléments sont représentés en coupe de façon plus détaillée.

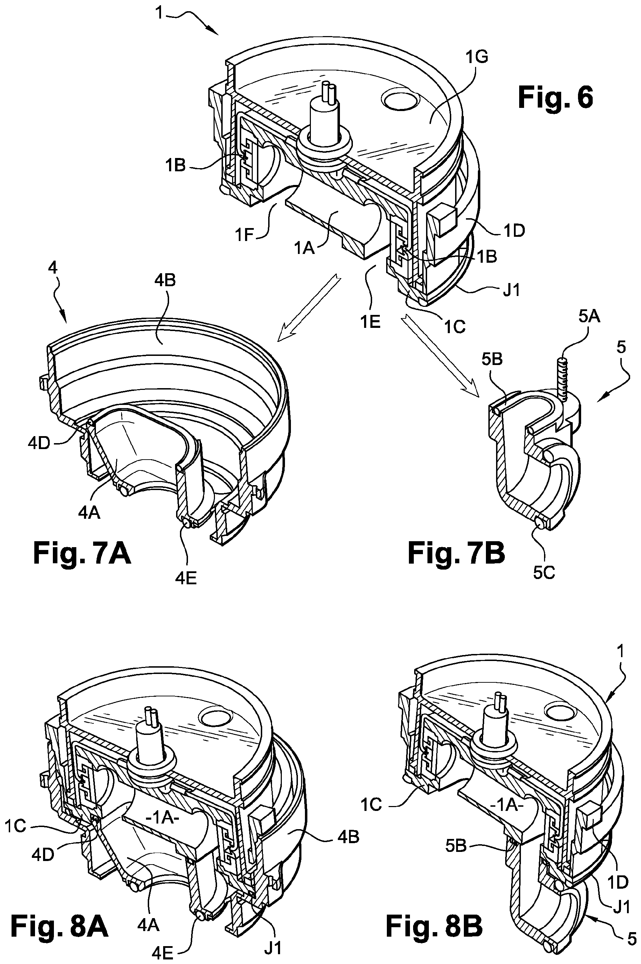

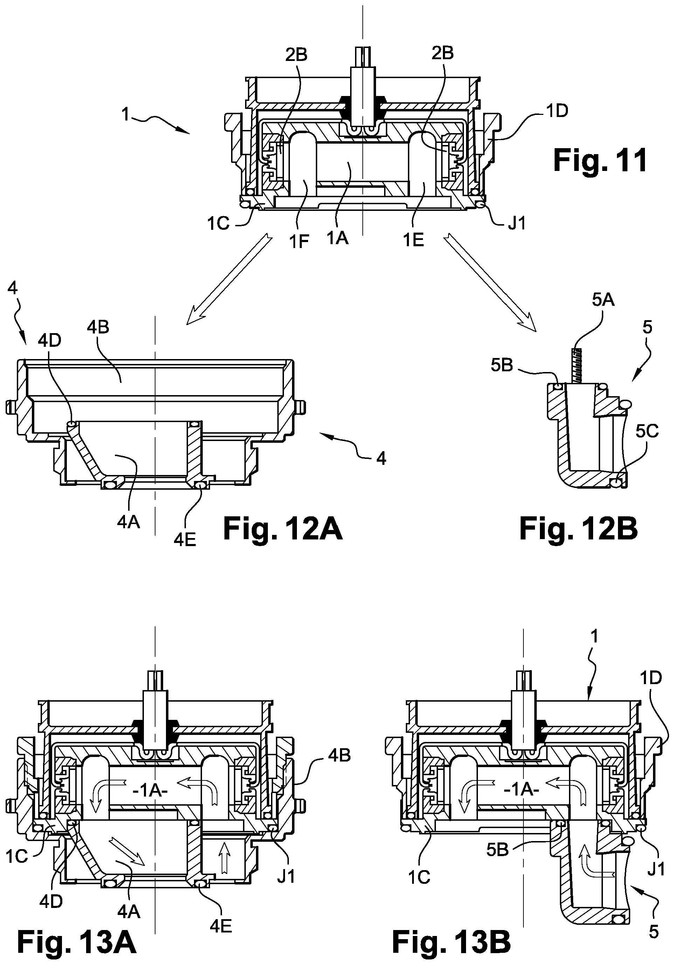

Comme représenté sur les figures 6 et 11, la cellule de mesure à ultra sons 1 comporte un canal de mesure 1A équipé d'un capteur ultra sons 1B émetteur et récepteur à chacune de ses extrémités.

Elle comporte un plateau 1C portant le canal de mesure et une bague de serrage 1D, ce plateau comportant une ouïe d'entrée 1E et une ouïe de sortie 1F, la pièce d'adaptation 4 ou 5 étant destinée à être connectée de façon étanche à l'une de ces ouïes. Un capot 1G de protection est disposé en partie supérieure.

La conduite d'entrée de la bâche 2A ou 3A est destinée à communiquer avec l'entrée du canal de mesure correspondant à l'ouïe d'entrée 1E et la conduite de sortie de la bâche 2B ou 3B est destinée à communiquer avec la sortie du canal de mesure correspondant l'ouïe de sortie 1F. Chaque pièce d'adaptation 4 ou 5 disposée au niveau de la bâche est raccordée à l'une des conduites de la bâche, cette pièce d'adaptation assurant un écoulement de fluide dans le canal de mesure 1A de la cellule de mesure.

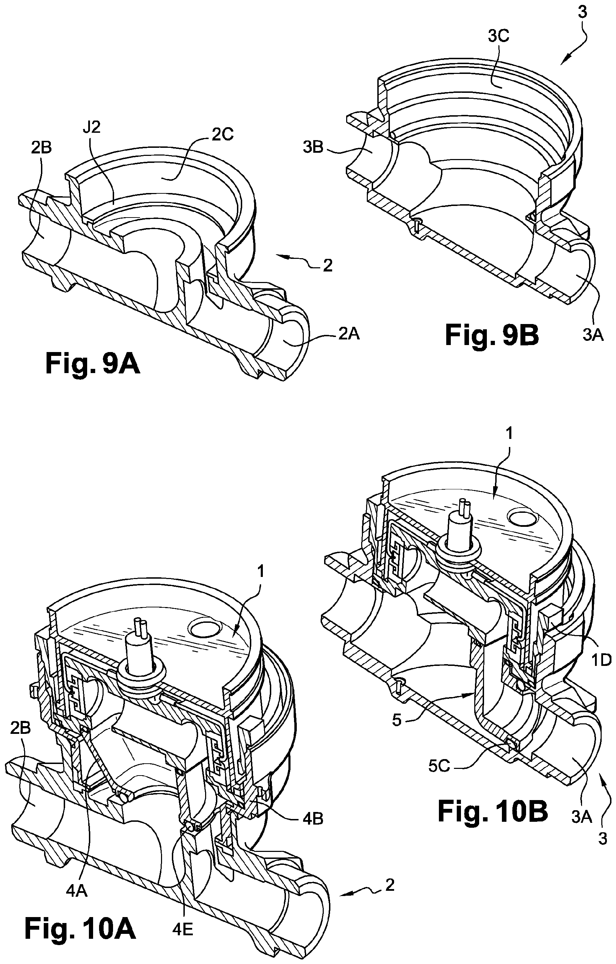

Dans un premier temps, considérons le montage d'une cellule de mesure 1 sur une bâche de type coaxial 2, montage illustré par les figures 7A, 8A, 9A 10A, 12A, 13A, 14A et 15A.

La pièce d'adaptation de premier type 4 comprend une pièce tubulaire évasée 4A destinée à être montée sur l'embouchure de la conduite de sortie 2B de la bâche et à être reliée de façon étanche à l'ouïe de sortie 1F de la cellule de mesure. Cette pièce d'adaptation comprend également une bague intermédiaire de serrage 4B destiné au serrage par filetage de la bâche 2 sur la cellule de mesure 1 et avantageusement formée d'une seule pièce avec la pièce tubulaire évasée 4A.

Tout d'abord, comme illustré sur la figure 8A, la cellule de mesure 1 est solidarisée à la pièce d'adaptation 4 par vissage de la bague intermédiaire 4B sur la bague de serrage 1D prévue sur la cellule de mesure. Ce serrage par vissage assure deux fonctions : le serrage du plateau 1C de la cellule de mesure 1 sur cette bague intermédiaire 4B avec interposition d'un joint d'étanchéité J1 prévu sur la cellule de mesure 1 et le serrage de la pièce tubulaire évasée 4A contre le plateau 1C de la cellule de mesure sur la périphérie de l'ouïe de sortie 1F de ce dernier, avec interposition d'un joint d'étanchéité 4D prévu à une extrémité de cette pièce tubulaire évasée 4A de la pièce d'adaptation 4.

Formant ainsi un sous-ensemble appelé capsule, cellule de mesure 1 et pièce d'adaptation 4 sont fixées à la bâche 2 par vissage de la bague intermédiaire 4B de la pièce d'adaptation 4 sur le filetage intérieur 2C porté par la bâche. Ce vissage assure le serrage de la pièce tubulaire évasée 4A par son autre extrémité restée libre contre la périphérie de l'embouchure de la conduite de sortie 2B de la bâche avec interposition d'un joint d'étanchéité 4E prévu sur la pièce d'adaptation. Ce vissage assure simultanément l'étanchéité du volume annulaire de la veine d'eau au niveau de la bâche grâce à la pression par la bague intermédiaire 4B, d'un joint J2 porté par la bâche au bas du filetage interne 2C de cette dernière.

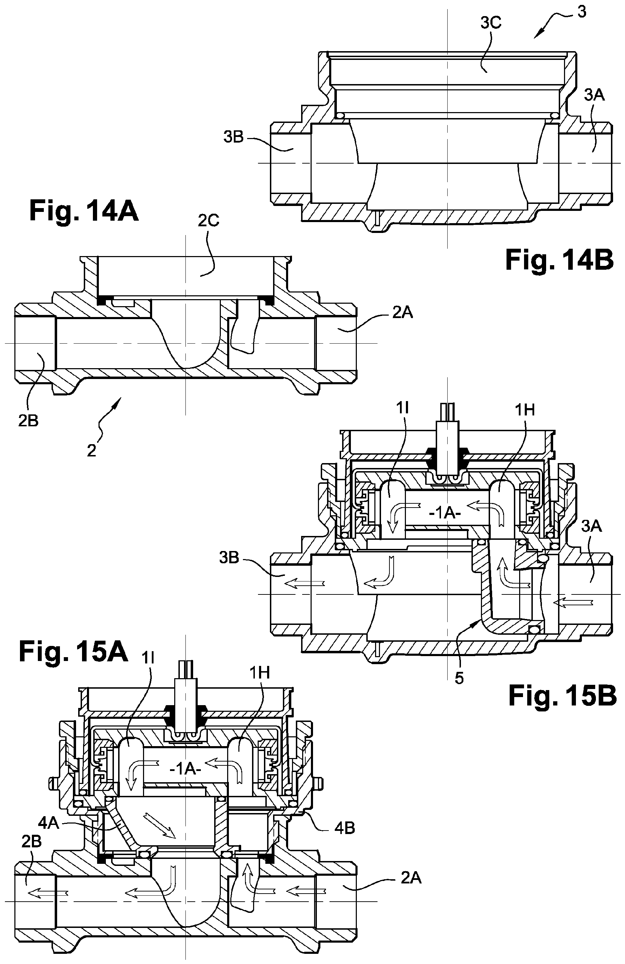

La figure 15A illustre par des flèches, l'écoulement du fluide. Ce dernier arrive par la conduite d'entrée 2A de la bâche, dans l'espace situé entre la bague intermédiaire 4B et la pièce tubulaire évasée 4A. Il parcourt un canal d'admission 1H pour atteindre le canal de mesure 1A d'où il s'évacue par un canal de refoulement 1l jusqu'à l'intérieur de la pièce tubulaire évasée 4A, d'où il s'écoule dans la conduite de sortie 2B de la bâche.

Lors du montage, un agencement de repères peut assurer le bon positionnement relatif de la cellule de mesure 1 et de la bâche 2 où l'axe des conduites d'entrée et de sortie 2A et 2B de la bâche et celui du canal de mesure sont alignés et/ou l'ouïe d'entrée 1E arrive en face de l'embouchure de la conduite d'entrée 2A.

En variante, il est possible de concevoir que ces axes ne soient pas alignés.

Dans un second temps, considérons le montage d'une cellule de mesure 1 sur une bâche de type aligné, montage illustré par les figures 7B, 8B, 9B, 10B, 12B, 13B, 14B et 15B.

La pièce d'adaptation de second type 5 consiste en une pièce tubulaire coudée à 90° destinée à être montée sur l'embouchure de la conduite d'entrée 3A de la bâche et à être reliée de façon étanche à l'ouïe d'entrée 1E du plateau 1C de la cellule de mesure.

Tout d'abord, comme illustré sur la figure 8B, la cellule de mesure 1 est solidarisée à la pièce d'adaptation 5 par serrage de vis 5A dans des alésages filetés correspondants de la cellule de mesure. Cette fixation par vis assure le serrage de la pièce d'adaptation 5 contre le plateau 1C de la cellule de mesure sur la périphérie de l'ouïe d'entrée 1E de ce dernier, avec interposition d'un joint d'étanchéité 5B prévu à une extrémité de la pièce d'adaptation 5.

Formant ainsi un sous-ensemble appelé capsule, cellule de mesure 1 et pièce d'adaptation 5 sont fixées à la bâche 3 par vissage de la bague de serrage 1D de la cellule de mesure sur le filetage intérieur 3C porté par la bâche. Ce vissage assure le serrage de la pièce d'adaptation 5 par son autre extrémité restée libre contre la périphérie de l'embouchure de la conduite de d'entrée 3A de la bâche avec interposition d'un joint d'étanchéité 5C prévu sur la pièce d'adaptation.

La figure 15B illustre par des flèches, l'écoulement du fluide. Ce dernier arrive par la conduite d'entrée 3A de la bâche, à l'intérieur de la pièce d'adaptation 5. Il parcourt ensuite le canal d'admission 1H pour atteindre le canal de mesure 1A d'où il s'évacue par le canal de refoulement 1l jusqu'à l'intérieur de la bâche 3, d'où il s'écoule dans la conduite de sortie 2B de la bâche.

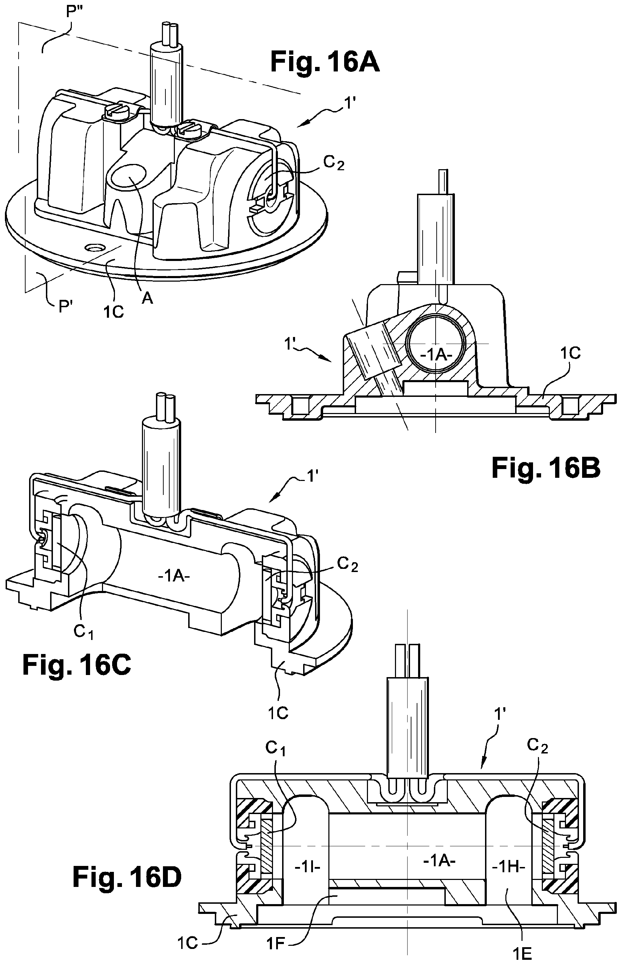

Les figures 16A à 16D représentent la chambre de mesure 1', partie de la cellule de mesure.

Une caractéristique importante de cette chambre est que le plateau circulaire 1C, le canal de mesure 1A et des logements destinés aux capteurs C1, C2 sont réalisés d'une seule pièce, de préférence en matière plastique moulée.

L'axe longitudinal du canal de mesure 1A est parallèle au plateau 1C. Les capteurs C1 et C2 qui sont des transducteurs à ultra son sont disposés aux extrémités du canal de mesure 1A, afin de réaliser une mesure de débit par tir face à face. De préférence, l'axe longitudinal du canal de mesure 1A est perpendiculaire à l'axe central du plateau 1C, afin de placer ce canal de mesure au centre du plateau et obtenir un canal de mesure le plus long possible dans la limite du diamètre du plateau 1C.

Les extrémités de ce canal de mesure communique avec les ouies d'entrée 1E et de sortie 1F par des canaux d'admission 1H et de refoulement 1l d'axe longitudinal perpendiculaire à l'axe du canal de mesure 1A. Ces canaux d'admission et de refoulement sont disposés le plus loin possible du centre du canal de mesure, c'est-à-dire le plus près possible des transducteurs C1, C2 afin de maximiser la longueur utile à la mesure du débit dans le trajet des ultrasons.

La chambre de mesure peut également comporter une sonde de mesure de température qui peut être mise en place dans un alésage A agencé dans la paroi de la chambre de mesure, dans le cas d'une application de compteur d'énergie thermique, par exemple.

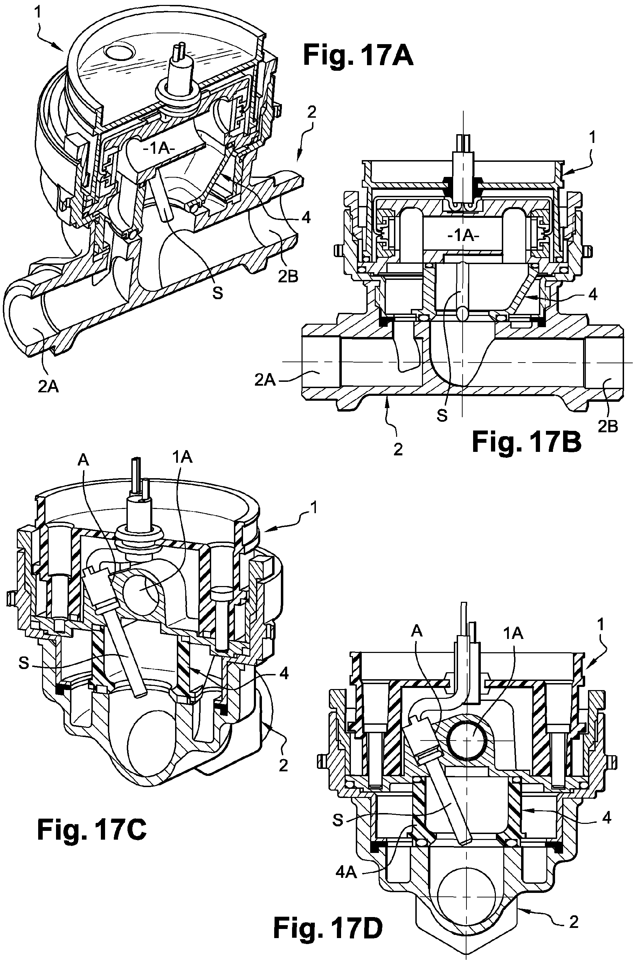

Ce type de montage d'une sonde de mesure de température est particulièrement adapté au montage sur une bâche de type coaxial, comme illustré sur les figures 17A à 17D.

La tête de la sonde S est fixée dans l'alésage A situé latéralement au canal de mesure 1A de sorte que son extrémité de mesure vient au coeur de l'écoulement de sortie au niveau de l'axe central du compteur au voisinage de l'extrémité de la pièce tubulaire évasée 4A de la pièce d'adaptation 4 serrée contre la bâche 4.

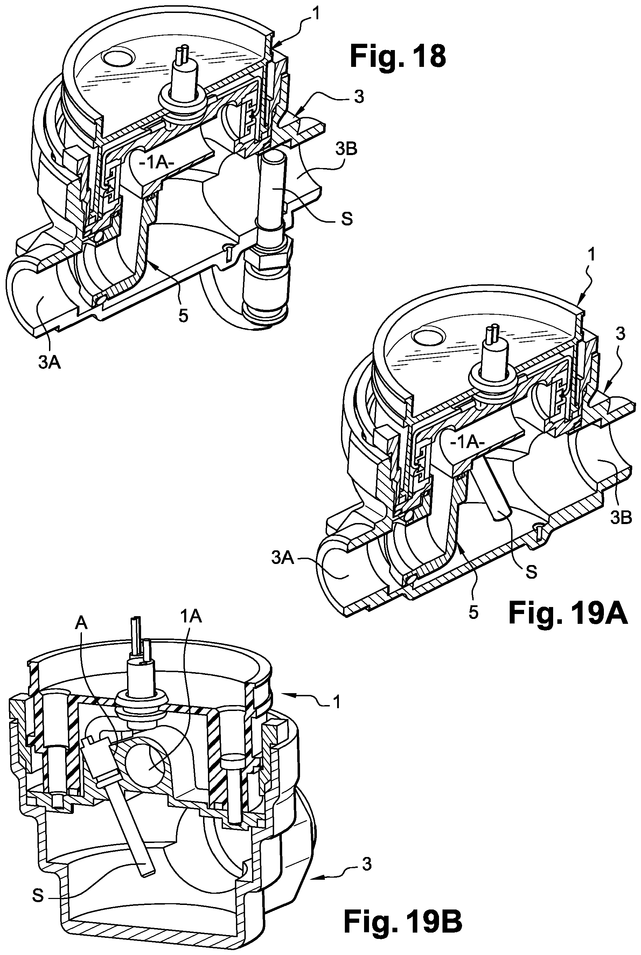

Dans le cas du montage de la cellule de mesure 1 sur une bâche de type aligné 3, il peut également être monté une sonde de mesure de la température S comme illustré sur les figures 18, 19A et 19B.

Cette sonde S peut être montée dans l'alésage A de façon inclinée comme précédemment et comme représenté sur les figures 19A et 19B. Son extrémité de mesure vient alors au coeur de l'écoulement de sortie à l'intérieur de la bâche 3.

En variante, la sonde S peut être montée dans la conduite de sortie de la bâche comme représenté sur la figure 18.

Le mode de réalisation décrit ci-dessus est un mode de réalisation préféré. L'invention concerne également des variantes de réalisation non spécifiquement décrites.

Par exemple, conduite d'entrée et conduite de sortie de chaque bâche peuvent être inversées. Par exemple, dans le cas d'une bâche de type coaxial, la conduite centrale peut être une conduite d'entrée et la conduite annulaire peut être une conduite de sortie.

## Revendications

1. Procédé de montage d'une cellule de mesure à ultrasons (1), de type capsule, comportant un canal de mesure (1A) équipé de capteurs d'ultrasons (C1, C2) disposé dans un capot (1G) et destinée à être montée sur une bâche comportant une conduite d'entrée et une conduite de sortie de types différents, ladite conduite d'entrée étant destinée à communiquer avec l'entrée du dit canal de mesure et ladite conduite de sortie étant destinée à communiquer avec la sortie du dit canal de mesure, **caractérisé en ce qu'**il consiste à utiliser une pièce d'adaptation (4, 5) supplémentaire pour raccorder ladite conduite d'entrée avec l'entrée du dit canal de mesure et ladite conduite de sortie avec la sortie du dit canal de mesure, la pièce d'adaptation (4, 5) supplémentaire étant :
soit une première pièce d'adaptation (4) destinée à être montée sur une bâche de type coaxial (2), dont une première conduite (2B) de sortie ou d'entrée présente un coude de façon à déboucher de façon centrée sur l'axe central de la bâche et une seconde conduite (2A) d'entrée ou de sortie débouche sur un volume annulaire coaxial, la pièce d'adaptation (4) comprenant une pièce tubulaire évasée (4A) destinée à être montée sur l'embouchure de ladite première conduite et à être reliée de façon étanche à ladite cellule de mesure (1);
soit une seconde pièce d'adaptation (5) destinée à être montée sur une bâche de type aligné (3), dont la conduite d'entrée (3A) et la conduite de sortie (3B) rectilignes et alignées débouchent directement dans l'intérieur de la bâche, la pièce d'adaptation (4) comprenant une pièce tubulaire coudée (5) destinée à être montée sur l'embouchure de l'une desdites conduites et à être reliée de façon étanche à ladite cellule de mesure (1).

2. Pièce d'adaptation (4) pour la mise en oeuvre du procède selon la revendication 1, destinée à une bâche de type coaxial (2), dont une première conduite (2B) de sortie ou d'entrée présente un coude de façon à déboucher de façon centrée sur l'axe central de la bâche et une seconde conduite (2A) d'entrée ou de sortie débouche sur un volume annulaire coaxial, **caractérisée en ce qu'**elle comprend une pièce tubulaire évasée (4A) destinée à être montée sur l'embouchure de ladite première conduite et à être reliée de façon étanche à ladite cellule de mesure (1).

3. Pièce selon la revendication précédente, **caractérisée en ce qu'**elle comprend également une bague intermédiaire de serrage (4B) de la bâche (2) sur la cellule de mesure (1).

4. Pièce selon la revendication précédente, **caractérisée en ce que** ladite pièce tubulaire évasée (4A) et ladite bague intermédiaire (4B) sont formée d'une seule pièce.

5. Pièce d'adaptation (5) pour la mise en oeuvre du procédé selon la revendication 1, destinée à une bâche de type aligné (3), dont la conduite d'entrée (3A) et la conduite de sortie (3B) rectilignes et alignées débouchent directement dans l'intérieur de la bâche, **caractérisée en ce qu'**elle consiste en une pièce tubulaire coudée (5) destinée à être montée sur l'embouchure de l'une desdites conduites et à être reliée de façon étanche à ladite cellule de mesure (1).

6. Pièce selon la revendication précédente, **caractérisée** en ce ladite pièce d'adaptation (5) est destinée à être montée sur la conduite d'entrée (3A).

7. Cellule de mesure (1) pour la mise en oeuvre du procédé selon la revendication 1, **caractérisée en ce qu'**elle comporte un plateau (1C) portant ledit canal de mesure (1A) et une bague de serrage (1D), ledit plateau comportant une ouïe d'entrée (1E) et une ouïe de sortie (1F), l'une de ces ouïes étant destinée à être connectée de façon étanche à ladite pièce d'adaptation (4,5).

8. Cellule de mesure selon la revendication précédente, **caractérisée en ce que** ledit plateau (1C), ledit canal de mesure (1A) et des logements destines auxdits capteurs (C1, C2) sont d'une seule pièce.

9. Cellule de mesure selon la revendication 7 ou 8, **caractérisée en ce qu'**elle comporte au moins une sonde de température (S).

10. Ensemble dit capsule constitué d'une cellule de mesure selon l'une des revendications 7 à 9 et d'une pièce d'adaptation selon l'une des revendications 2 à 6, assemblées.

## Patentansprüche

1. Verfahren zur Montage einer Ultraschall-Messzelle (1), von der Art Kapsel, die einen in einem Deckel (1G) angeordneten, mit Ultraschallsensoren (C1, C2) ausgestatteten Messkanal (1A) aufweist und dazu bestimmt ist, auf einen Behälter montiert zu werden, der eine Eingangsleitung und eine Ausgangsleitung unterschiedlicher Art aufweist, wobei die Eingangsleitung dazu bestimmt ist, mit dem Eingang des Messkanals zu kommunizieren, und die Ausgangsleitung dazu bestimmt ist, mit dem Ausgang des Messkanals zu kommunizieren, **dadurch gekennzeichnet, dass** es darin besteht, ein zusätzliches Anpassbauteil (4, 5) zu verwenden, um die Eingangsleitung mit dem Eingang des Messkanals und die Ausgangsleitung mit dem Ausgang des Messkanals zu verbinden, wobei das zusätzliche Anpassbauteil (4, 5) ist:
entweder ein erstes Anpassbauteil (4), das dazu bestimmt ist, auf einen koaxialen Behälter (2) montiert zu werden, von dem eine erste Ausgangs- oder Eingangsleitung (2B) eine Krümmung aufweist, um auf die Mittelachse des Behälters zentriert zu münden, und eine zweite Eingangs- oder Ausgangsleitung (2A) auf ein koaxiales Ringvolumen mündet, wobei das Anpassbauteil (4) ein aufgeweitetes rohrförmiges Bauteil (4A) aufweist, das dazu bestimmt ist, auf die Mündung der ersten Leitung montiert und dicht mit der Messzelle (1) verbunden zu werden;
oder ein zweites Anpassbauteil (5), das dazu bestimmt ist, auf einen fluchtend ausgerichteten Behälter (3) montiert zu werden, dessen geradlinige und fluchtend ausgerichtete Eingangsleitung (3A) und Ausgangsleitung (3B) direkt ins Innere des Behälters münden, wobei das Anpassbauteil (4) ein gekrümmtes rohrförmiges Bauteil (5) enthält, das dazu bestimmt ist, auf die Mündung einer der Leitungen montiert und dicht mit der Messzelle (1) verbunden zu werden.

2. Anpassbauteil (4) zur Durchführung des Verfahrens nach Anspruch 1, bestimmt für einen koaxialen Behälter (2), von dem eine erste Ausgangs- oder Eingangsleitung (2B) eine Krümmung aufweist, um auf die Mittelachse des Behälters zentriert zu münden, und eine zweite Eingangs- oder Ausgangsleitung (2A) auf ein koaxiales ringförmiges Volumen mündet, **dadurch gekennzeichnet, dass** es ein aufgeweitetes rohrförmiges Bauteil (4A) aufweist, das dazu bestimmt ist, auf die Mündung der ersten Leitung montiert und dicht mit der Messzelle (1) verbunden zu werden.

3. Bauteil nach dem vorhergehenden Anspruch, **dadurch gekennzeichnet, dass** es ebenfalls einen Zwischenring (4B) zum Klemmen des Behälters (2) auf die Messzelle (1) enthält.

4. Bauteil nach dem vorhergehenden Anspruch, **dadurch gekennzeichnet, dass** das aufgeweitete rohrförmige Bauteil (4A) und der Zwischenring (4B) aus einem einzigen Bauteil gebildet werden.

5. Anpassbauteil (5) zur Durchführung des Verfahrens nach Anspruch 1, das für einen fluchtend ausgerichteten Behälter (3) bestimmt ist, dessen geradlinige und ausgerichtete Eingangsleitung (3A) und Ausgangsleitung (3B) direkt ins Innere des Behälters münden, **dadurch gekennzeichnet, dass** es aus einem gekrümmten rohrförmigen Bauteil (5) besteht, das dazu bestimmt ist, auf die Mündung einer der Leitungen montiert und dicht mit der Messzelle (1) verbunden zu werden.

6. Bauteil nach dem vorhergehenden Anspruch, **dadurch gekennzeichnet, dass** das Anpassbauteil (5) dazu bestimmt ist, auf die Eingangsleitung (3A) montiert zu werden.

7. Messzelle (1) zur Durchführung des Verfahrens nach Anspruch 1, **dadurch gekennzeichnet, dass** sie eine Platte (1C) aufweist, die den Messkanal (1A) und einen Klemmring (1D) trägt, wobei die Platte eine Eingangsöffnung (1E) und eine Ausgangsöffnung (1F) aufweist, wobei eine dieser Öffnungen dazu bestimmt ist, dicht mit dem Anpassbauteil (4, 5) verbunden zu werden.

8. Messzelle nach dem vorhergehenden Anspruch, **dadurch gekennzeichnet, dass** die Platte (1C), der Messkanal (1A) und für die Sensoren (C1, C2) bestimmte Aufnahmen aus einem einzigen Bauteil bestehen.

9. Messzelle nach Anspruch 7 oder 8, **dadurch gekennzeichnet, dass** sie mindestens einen Temperaturfühler (S) aufweist.

10. Kapsel genannte Einheit, die aus einer Messzelle nach einem der Ansprüche 7 bis 9 und einem Anpassbauteil nach einem der Ansprüche 2 bis 6, zusammengenommen, besteht.

## Claims

1. Method of mounting a capsule type ultrasound measurement cell (1) including a measurement channel (1A) equipped with ultrasound sensors (C1, C2) disposed in a cap (1G) and intended to be mounted on a tank including an inlet pipe and an outlet pipe of different types, said inlet pipe being intended to communicate with the inlet of said measurement channel and said outlet pipe being intended to communicate with the outlet of said measurement channel, **characterized in that** it consists in using an additional adapter (4, 5) for connecting said inlet pipe with the inlet of said measurement channel and said outlet pipe with the outlet of said measurement channel, the additional adapter (4,5,) being:
either a first adapter (4) intended to be mounted on a coaxial type tank (2), a first (outlet or inlet) pipe (2B) of which includes an elbow so as to discharge centrally on the central axis of the tank and a second (respectively inlet or outlet) pipe (2A) discharges into a coaxial annular volume, the adapter (4) comprising a flared tubular part (4A) intended to be mounted on the mouth of said first pipe and to be connected in sealed fashion to said measurement cell (1) ;
or a second adapter (5) intended to be mounted on an aligned type tank (3), the inlet pipe (3A) and the outlet pipe (3B) of which are straight and aligned with each other and discharge directly into the interior of the tank, the adapter (4) comprising an elbowed tubular part (5) intended to be mounted on the mouth of one of said pipes and to be connected in sealed fashion to said measurement cell (1).

2. Adapter (4) for implementing the method according to Claim 1, intended for a coaxial type tank (2), a first (outlet or inlet) pipe (2B) of which includes an elbow so as to discharge centrally on the central axis of the tank and a second (respectively inlet or outlet) pipe (2A) discharges into a coaxial annular volume, **characterized in that** it comprises a flared tubular part (4A) intended to be mounted on the mouth of said first pipe and to be connected in sealed fashion to said measurement cell (1).

3. Adapter according to the preceding claim, **characterized in that** it also comprises an intermediate ring (4B) for clamping the tank (2) onto the measurement cell (1).

4. Adapter according to the preceding claim, **characterized in that** said flared tubular part (4A) and said intermediate ring (4B) are formed in one piece.

5. Adapter (5) for implementing the method according to Claim 1, intended for an aligned type tank (3), the inlet pipe (3A) and the outlet pipe (3B) of which are straight and aligned with each other and discharge directly into the interior of the tank, **characterized in that** it consists in an elbowed tubular part (5) intended to be mounted on the mouth of one of said pipes and to be connected in sealed fashion to said measurement cell (1).

6. Adapter according to the preceding claim, **characterized in that** said adapter (5) is intended to be mounted on the inlet pipe (3A).

7. Measurement cell (1) for implementing the method according to Claim 1, **characterized in that** it includes a plate (1C) carrying said measurement channel (1A) and a clamping ring (1D), said plate including an inlet orifice (1E) and an outlet orifice (IF), and one of those orifices being intended to be connected in sealed fashion to said adapter (4, 5).

8. Measurement cell according to the preceding claim, **characterized in that** said plate (1C), said measurement channel (1A) and housings intended for said sensors (C1, C2) are in one piece.

9. Measurement cell according to Claim 7 or 8, **characterized in that** it includes at least one temperature probe (S).

10. Capsule assembly consisting of a measurement cell according to one of Claims 7 to 9 and an adapter according to one of Claims 2 to 6, assembled together.
